(19) Europäisches Patentamt
European Patent Office
Office européen des brevets

(11) EP 2 760 898 B1

(12) # EUROPÄISCHE PATENTSCHRIFT

(45) Veröffentlichungstag und Bekanntmachung des Hinweises auf die Patenterteilung:
**19.08.2015 Patentblatt 2015/34**

(21) Anmeldenummer: **12756208.0**

(22) Anmeldetag: **10.09.2012**

(51) Int Cl.:
***C08F 220/28*** (2006.01) ***C08F 230/08*** (2006.01)
***C09D 133/06*** (2006.01) ***C09D 143/04*** (2006.01)
***C09J 133/06*** (2006.01) ***C09J 143/04*** (2006.01)

(86) Internationale Anmeldenummer:
**PCT/EP2012/067605**

(87) Internationale Veröffentlichungsnummer:
**WO 2013/045259 (04.04.2013 Gazette 2013/14)**

(54) **VERFAHREN ZUR HERSTELLUNG EINER WÄSSRIGEN POLYMERISATDISPERSION**
PROCESS FOR PREPARING AN AQUEOUS POLYMER DISPERSION
PROCÉDÉ DE PRÉPARATION D’UNE DISPERSION AQUEUSE DE POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2011 EP 11183143**

(43) Veröffentlichungstag der Anmeldung:
**06.08.2014 Patentblatt 2014/32**

(73) Patentinhaber: **BASF SE**
**67056 Ludwigshafen (DE)**

(72) Erfinder:
- **BURK, Yeni**
  **67061 Ludwigshafen (DE)**
- **MANGEL, Timo**
  **76470 Ötigheim (DE)**
- **LIEDY, Reiner**
  **67459 Böhl-Iggelheim (DE)**
- **FEIL, Martina**
  **67149 Meckenheim (DE)**
- **MORARU, Bogdan**
  **Charlotte, NC 28277 (US)**

(56) Entgegenhaltungen:
**EP-A2- 1 209 210 EP-B1- 1 732 997**
**DE-A1- 4 404 188**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 760 898 B1

## Beschreibung

Gegenstand der vorliegenden Erfindung ist ein Verfahren zur Herstellung einer wässrigen Dispersion eines Polymerisats P durch radikalisch initiierte wässrige Emulsionspolymerisation ethylenisch ungesättigter Verbindungen, welches dadurch gekennzeichnet ist, dass

| | |
|---|---|
| ≥ 0,1 und ≤ 5,0 Gew.-% | wenigstens einer $\alpha,\beta$-monoethylenisch ungesättigten $C_3$- bis $C_6$-Mono- oder Dicarbonsäure und/oder wenigstens eines $\alpha,\beta$-morioethylenisch ungesättigten $C_3$- bis $C_6$-Mono- oder Dicarbonsäureamids (Monomere A) |
| ≥ 0,1 und ≤ 5,0 Gew.-% | wenigstens einer monoethylenisch ungesättigten silangruppenhaltigen Verbindung (Monomere B) |
| ≥ 0,1 und ≤ 5,0 Gew.-% | wenigstens eines Hydroxyalkylacrylats und/oder -methacrylats (Monomere C) |
| ≥ 0 und ≤ 5,0 Gew.-% | wenigstens eines vernetzend wirkenden Monomeren mit wenigstens zwei nichtkonjugierten ethylenisch ungesättigten Gruppen (Monomere D) |
| ≥ 30 und ≤ 75 Gew.-% | wenigstens eines ethylenisch ungesättigten Monomeren, dessen Homopolymerisat eine Glasübergangstemperatur ≤ 30 °C aufweist (Monomere E) und welches sich von den Monomeren A bis D unterscheidet, und |
| ≥ 20 und ≤ 69,7 Gew.-% | wenigstens eines ethylenisch ungesättigten Monomeren, dessen Homopolymerisat eine Glasübergangstemperatur ≥ 50 °C aufweist (Monomere F) und welches sich von den Monomeren A bis D unterscheidet, |

wobei sich die Mengen der Monomeren A bis F auf 100 Gew.-% aufsummierten, eingesetzt werden.

Gegenstand der vorliegenden Erfindung sind ferner die nach dem Verfahren erhältlichen wässrigen Polymerisatdispersionen selbst und die daraus zugänglichen Polymerisatpulver sowie die Verwendung der wässrigen Polymerisatdispersionen und der Polymerisatpulver in unterschiedlichsten Anwendungsgebieten, insbesondere als wesentliche Komponente in Fliesenklebern.

Bei der Verwendung von Polymerisaten auf Basis wässriger Polymerisatdispersionen zur Herstellung von Fliesenklebern ist von folgendem Stand der Technik auszugehen.

So offenbart die EP-A 35332 die Verwendung von wässrigen Polymerisatdispersionen, deren Polymerisate bis zu 10 Gew.-% an ethylenisch ungesättigten Säuren sowie 0,1 bis 1,0 Gew.-% an ethylenisch ungesättigten Siliziumverbindungen in einpolymerisierter Form enthalten, als wasserfeste Klebstoffe für keramische Fliesen.

Gegenstand der EP-A 366969 sind Dichtungsmassen und Klebstoffe für keramische Fliesen mit guter Nasshaftung, enthaltend als wesentliche Komponenten in wässriger Dispersion vorliegender Kunststoffteilchen, welche zwingend 0,1 bis 4 Gew.-% eines gesättigten Mercaptosilans enthalten.

Die EP-A 640630 beschreibt siliziummodifizierte wässrige Kunststoffdispersionen für die Verwendung in Klebemassen mit verbesserter Nasshaftung, zu deren Herstellung neben Vinylsilanen, hart- und weichmachenden Monomeren ethylenisch ungesättigte Carbonsäure und deren Amide eingesetzt werden.

In der EP-A 1147139 werden wässrige Copolymerisatdispersionen beschrieben, welche im wesentlichen aus einer wässrigen Dispersion eines spezifischen Copolymerisats bestehen, welches neben den als Hauptmonomeren fungierenden Alkylester ethylenisch ungesättigter Carbonsäuren und vinylaromatischen Verbindungen zwingend noch je 0,05 bis 10 Gew.-% ethylenisch ungesättigter Carbonsäuren bzw. deren Aminden und vernetzend wirkenden ethylenisch ungesättigten Verbindungen sowie optional weitere ethylenisch ungesättigte Verbindungen in einpolymerisierter Form enthalten. Die mit den genannten wässrigen Copolymerisatdispersionen erhaltenen Beschichtungen sollen eine niedrige Wasseraufnahme sowie eine gute Reißdehnung und gute Relaxation nach definierter Dehnung aufweisen.

Siliziumhaltige Polymerdispersionen und deren Verwendung zur Herstellung wasserfester und wärmestabiler Beschichtungen, Abdichtungen und Verklebungen, wie insbesondere Fliesenverklebungen werden in der EP-A 1180530 offenbart. Neben den hydrolysierbare Silangruppen ausweisenden Polymeren enthält die wässrige Polymerdispersion zwingend noch Verbindungen mit Harnstoff- oder Thioharnstoffgruppen.

Die EP-A 1732997 beschreibt geruchsarme, lösungsmittelfrei verarbeitbare Bindemittelpolymerisate und deren Verwendung in Beschichtungsmassen. Die offenbarten Polymerisate werden durch Polymerisation eines Monomerengemisches bestehend aus 2-Ethylhexylacrylat, wenigstens eines Monomeren, dessen Homopolymerisat eine Glasübergangstemperatur > 50 °C aufweist, wenigstens eines säuregruppenhaltigen Monomeren sowie optional wenigstens eines Monomeren, dessen Homopolymerisat eine Glasübergangstemperatur < 10 °C aufweist bzw. eines Monomeren, welches mindestens eine Hydroxy-, Keto- und/oder Silangruppe in der Seitenkette aufweist.

Allerdings vermögen die wässrigen Bindemittelsysteme des Standes der Technik nicht in allen anwendungstechnischen Eigenschaften, wie insbesondere die zur Verfügung stehende Verarbeitungszeit (offene Zeit), die Haftung

von keramischen Fliesen an Oberflächen sowie deren Scherfestigkeit nach Wasserlagerung voll zu befriedigen.

Aufgabe der vorliegenden Erfindung war es daher, wässrige Polymerisatdispersionen bereitzustellen, welche bei ihrer Verwendung als Bestandteil eines Fliesenklebstoffes eine verlängerte Verarbeitungszeit, eine höhere Haftung von keramischen Fliesen an Oberflächen sowie eine verbesserte Scherfestigkeit nach Wasserlagerung der verklebten Fliesen gewährleisten.

Die Aufgabe wurde durch eine wässrige Polymerisatdispersion gelöst, welche nach dem eingangs definierten Verfahren zugänglich ist.

Die wässrige Dispersion eines Polymerisats P (wässrige Polymerisat P-Dispersion) wird durch radikalisch initiierte wässrige Emulsionspolymerisation von

| | |
|---|---|
| $\geq$ 0,1 und $\leq$ 5,0 Gew.-% | wenigstens eines Monomeren A |
| $\geq$ 0,1 und $\leq$ 5,0 Gew.-% | wenigstens eines Monomeren B |
| $\geq$ 0,1 und $\leq$ 5,0 Gew.-% | wenigstens eines Monomeren C |
| $\geq$ 0 und $\leq$ 5,0 Gew.-% | wenigstens eines Monomeren D |
| $\geq$ 30 und $\leq$ 75 Gew.-% | wenigstens eines Monomeren E und |
| $\geq$ 20 und $\leq$ 69,7 Gew.-% | wenigstens eines Monomeren F |

erhalten, wobei sich die Mengen der Monomeren A bis F auf 100 Gew.-% aufsummieren.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung öder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt. Von dieser allgemeinen Verfahrensweise unterscheidet sich die Herstellung einer wässrigen Dispersion des Polymerisats P lediglich durch den spezifischen Einsatz der vorgenannten Monomeren A bis F. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Als Monomere A kommen $\alpha,\beta$-monoethylenisch ungesättigte $C_3$- bis $C_6$-, bevorzugt $C_3$- oder $C_4$- Mono- oder Dicarbonsäuren wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure in Betracht. Die Monomeren A umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das säuregruppenhaltige Monomer A ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei Acrylsäure, Methacrylsäure und/oder Itaconsäure besonders bevorzugt sind. Selbstverständlich umfassen die Monomeren A auch die voll- oder teilneutralisierten wasserlöslichen Salze, insbesondere die Alkalimetall- oder Ammoniumsalze, der vorgenannten Säuren.

Als Monomere A kommen darüber hinaus alle $\alpha,\beta$-monoethylenisch ungesättigten $C_3$- bis $C_6$- Mono- oder Dicarbonsäureamide in Betracht. Ebenfalls zu den Monomeren A zählen die vorgenannten Verbindungen, deren Carbonsäureamidgruppe mit einer Alkyl- oder einer Methylolgruppe substituiert ist. Beispiele für derartige Monomere A sind die Amide bzw. Diamide der $\alpha,\beta$-monoethylenisch ungesättigten $C_3$- bis $C_6$-, bevorzugt $C_3$- oder $C_4$-Mono- oder Dicarbonsäuren wie beispielsweise Acrylamid, Methacrylamid, Ethylacrylsäureamid, Itaconsäure-mono- oder diamid, Allylessigsäureamid, Crotonsäure-mono- oder diamid, Vinylessigsäureamid, Fumarsäure-mono- oder diamid, Maleinsäure-mono- oder diamid sowie 2-Methylmaleinsäure-mono- oder diamid. Beispiele für $\alpha,\beta$-monoethylenisch ungesättigte $C_3$- bis $C_6$-Mono- oder Dicarbonsäureamide, deren Carbonsäureamidgruppe mit einer Alkyl- oder einer Methylolgruppe substituiert sind, sind N-Alkylacrylamide- und -methacrylamide, wie beispielsweise N-tert.-Butylacrylamid und -methacrylamid, N-Methylacrylamid und -methacrylamid sowie N-Methylolacrylamid und N-Methylolmethacrylamid. Bevorzugte amidische Monomere A sind Acrylamid, Methacrylamid, N-Methylolacrylamid und/oder N-Methylolmethacrylamid, wobei Methylölacrylamid und/oder N-Methylolmethacrylamid insbesondere bevorzugt sind.

Als Monomere A bevorzugt sind jedoch Acrylsäure, Methacrylsäure, Crotonsäure, Fumarsäure, Maleinsäure, Maleinsäureanhydrid, 2-Methylmaleinsäure und/oder Itaconsäure, wobei Acrylsäure und/oder Methacrylsäure besonders bevorzugt sind.

Die verfahrensmäßig eingesetzte Menge an Monomeren A beträgt ≥ 0,1 und ≤ 5,0 Gew.-%, bevorzugt ≥ 0,5 und ≤ 3,0 Gew.-% und insbesondere bevorzugt ≥ 1,0 und ≤ 2,5 Gew.-%.

Als Monomere B kommen alle monoethylenisch ungesättigten silangruppenhaltigen Verbindungen in Betracht. Mit besonderem Vorteil weisen die Monomeren B eine hydrolysierbare Silangruppe auf. Vorteilhaft enthalten hydrolysierbare Silangruppen wenigstens eine Alkoxygruppe oder ein Halogenatom, wie beispielsweise Chlor. Erfindungsgemäß vorteilhaft einsetzbare Monomere B sind in der WO 2008/150647, Seite 9, Zeilen 5 bis 25 offenbart. Durch ihre ausdrückliche Bezugnahme sollen diese Monomere B als Bestandteil der vorliegenden Beschreibung angesehen werden. Mit besonderem Vorteil ist das Monomer B jedoch ausgewählt aus der Gruppe umfassend Vinyltriacetoxysilan, 3-Methacryloxypropyltrimethylsilan und Vinyltriethoxysilan.

Die verfahrensmäßig eingesetzte Menge an Monomeren B beträgt ≥ 0,1 und ≤ 5,0 Gew.-%, bevorzugt ≥ 0,5 und ≤ 2,0 Gew.-% und insbesondere bevorzugt ≥ 0,5 und ≤ 1,5 Gew.-%.

Als Monomere C können prinzipiell alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder - methacrylate eingesetzt werden, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere C angesehen werden sollen. Mit Vorteil ist das wenigstens eine Monomere C ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat. Insbesondere vorteilhaft wird 2-Hydroxyethylacrylat und/oder 2-Hydroxyethylmethacrylat eingesetzt, wobei 2-Hydroxyethylacrylat besonders bevorzugt ist.

Die verfahrensmäßig eingesetzte Menge an Monomeren C beträgt ≥ 0,1 und ≤ 5,0 Gew.-%, bevorzugt ≥ 0,5 und ≤ 3,0 Gew.-% und insbesondere bevorzugt ≥ 0,5 und ≤ 2,0 Gew.-%.

Als Monomere D kommen alle Verbindungen in Betracht, welche wenigstens zwei nicht konjugierte ethylenisch ungesättigte Gruppen aufweisen. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, Tri-Ester dreiwertiger Alkohole mit $\alpha,\beta$-monoethylenisch ungesättigten Monocarbonsäuren, wie beispielsweise Glyzerintriacrylat, Glyzerintrimethacrylat, Trimethylolpropantriacrylat, Trimethylolpropantrimethacrylat, sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Insbesondere bevorzugt sind 1,4-Butylenglykoldiacrylat, Allylmethacrylat und/oder Divinylbenzol.

Die verfahrensmäßig eingesetzte Menge an Monomeren D beträgt ≥ 0 und ≤ 5,0 Gew.-% und bevorzugt ≥ 0 und ≤ 1,0 Gew.-%.

Als Monomere E kommen alle ethylenisch ungesättigten Monomere in Betracht, deren Homopolymerisate eine Glasübergangstemperatur ≤ 30 °C aufweisen und welche sich von den Monomeren A bis D unterscheiden. Geeignete Monomere E sind beispielsweise konjugierte aliphatische $C_4$- bis $C_9$-Dienverbindungen, Ester aus Vinylalkohol und einer $C_1$- bis $C_{10}$-Monocarbonsäure, $C_1$- bis $C_{10}$-Alkylacrylat, $C_5$- bis $C_{10}$-Alkyimethacrylat, $C_5$- bis $C_{10}$-Cycloalkylacrylat und -methacrylat, $C_1$- bis $C_{10}$-Dialkylmaleinat und/oder $C_1$- bis $C_{10}$-Dialkylfumarat, Vinylether von $C_3$- bis Cio-Alkanolen, verzweigte und unverzweigte $C_3$- bis $C_{10}$-Olefine. Vorteilhaft werden solche Monomere E verwendet, deren Homopolymerisate Tg-Werte < 0°C aufweisen. Insbesondere vorteilhaft werden als Monomere E Vinylacetat, Ethylacrylat, n-Propylacrylat, n-Butylacrylat, iso-Butylacrylat, sec-Butylacrylat, n-Hexylacrylat, 2-Ethylhexylacrylat, n-Hexylmethacrylat, 2-Ethylhexylmethacrylat, Di-n-butylmaleinat, Di-n-butyl-fumarat verwendet, wobei 2-Ethylhexylacrylat, n-Butylacrylat, 1,4-Butadien und/oder Ethylacrylat insbesondere bevorzugt sind.

Die verfahrensmäßig eingesetzte Menge an Monomeren E beträgt ≥ 30 und ≤ 75 Gew.-%, bevorzugt ≥ 40 und ≤ 65 Gew.-% und insbesondere bevorzugt ≥ 45 und ≤ 60 Gew.-%.

Als Monomere F kommen alle ethylenisch ungesättigten Monomere in Betracht, deren Homopolymerisate eine Glasübergangstemperatur ≥ 50 °C aufweisen und welche sich von den Monomeren A bis D unterscheiden. Geeignete Monomere F sind beispielsweise vinylaromatische Monomere, $C_1$- bis $C_4$-Alkylmethacrylate und ethylenisch ungesättigte Nitrilverbindungen. Unter vinylaromatischen Monomeren versteht man insbesondere Derivate des Styrols oder des $\alpha$-

Methylstyrols, in denen die Phenylkerne gegebenenfalls durch 1, 2 oder 3 $C_1$- bis $C_4$-Alkylgruppen, Halogen, insbesondere Brom oder Chlor und/oder Methoxygruppen substituiert sind. Bei den ethylenisch ungesättigten Nitrilverbindungen handelt es sich im wesentlichen um die Nitrile, die sich von den vorgenannten $\alpha,\beta$-monoethylenisch ungesättigten, insbesondere $C_3$-bis $C_6$-, bevorzugt $C_3$- oder $C_4$-Mono- oder Dicarbonsäuren ableiten, wie beispielsweise Acrylnitril, Methacrylnitril, Maleinsäuredinitril und/oder Fumarsäuredinitril, wobei Acrylnitril und/oder Methacrylnitril besonders bevorzugt sind. Bevorzugt werden solche Monomere, deren Homopolymerisate eine Glasübergangstemperatur $\geq$ 80°C aufweisen. Besonders bevorzugte Monomere sind Styrol, $\alpha$-Methylstyrol, o- oder p-Vinyltoluol, p-Acetoxystyrol, p-Bromstyrol, p-tert.-Butylstyrol, o-, m- oder p-Chlorstyrol, Methylmethacrylat, tert.-Butylacrylat, tert.- Butylmethacrylat, Ethylmethacrylat, Isobutylmethacrylat, n-Hexylacrylat, Cyclohexylmethacrylat, Acrylnitril, Methacrylnitril, aber beispielsweise auch tert.-Butylvinylether oder Cyclohexylvinylether, wobei jedoch Methylmethacrylat, Styrol und/oder tert.-Butylmethacrylat insbesondere bevorzugt sind.

Die verfahrensmäßig eingesetzte Menge an Monomeren F beträgt $\geq$ 20 und $\leq$ 69,7 Gew.-%, bevorzugt $\geq$ 30 und $\leq$ 58,5 Gew.-% und insbesondere bevorzugt $\geq$ 30 und $\leq$ 53 Gew.-%.

Mit Vorteil ist das wenigstens eine Monomere E ausgewählt ist aus der Gruppe umfassend konjugierte aliphatische $C_4$- bis $C_9$-Dienverbindung, Ester aus Vinylalkohol und einer $C_1$- bis $C_{10}$-Monocarbonsäure, $C_1$- bis $C_{10}$-Alkylacrylat, $C_5$- bis $C_{10}$-Alkylmethacrylat, $C_5$- bis $C_{10}$-Cycloalkylacrylat und -methacrylat, $C_1$- bis $C_{10}$-Dialkylmaleinat und $C_1$- bis $C_{10}$-Dialkylfumarat und das wenigstens eine Monomere F ausgewählt ist aus der Gruppe umfassend vinylaromatisches Monomer und $C_1$- bis $C_4$-Alkylmethacrylat, wobei 2-Ethylhexylacrylat, n-Butylacrylat, und/oder Ethylacrylat als Monomere E und Methylmethacrylat, Styrol und/oder tert.-Butylmethacrylat als Monomere F insbesondere bevorzugt sind

Mit der Glasübergangstemperatur Tg, ist im Rahmen dieser Schrift der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Tg wird nach dem DSC-Verfahren ermittelt (Differential Scanning Calorimetry, 20 K/min, midpoint-Messung, DIN 53 765). Die Tg-Werte für die Homopolymerisate der meisten Monomeren sind bekannt und z.B. in Ullmann' s Encyclopedia of Industrial Chemistry, VCH Weinheim, 1992, Bd. 5, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Unter $C_1$- bis $C_{10}$-Alkylgruppen sollen im Rahmen dieser Schrift lineare oder verzweigte Alkylreste mit 1 bis 10-Kohlenstoffatomen, beispielsweise Methyl, Ethyl, n-Propyl, iso-Propyl, n-Butyl, sec-Butyl, iso-Butyl, tert.-Butyl, n-Pentyl, iso-Pentyl, tert.-Pentyl n-Hexyl, 2-Ethylhexyl, n-Nonyl oder n-Decyl verstanden werden. Unter $C_5$- bis $C_{10}$-Cycloalkylgruppen sind vorzugsweise Cyclopentyl- oder Cyclohexylgruppen zu verstehen, welche gegebenenfalls durch 1, 2 oder 3 $C_1$- bis $C_4$-Alkylgruppen substituiert sein können.

Vorteilhaft werden zur Herstellung.der wässrigen Polymerisat P-Dispersion

| | |
|---|---|
| $\geq$ 0,5 und $\leq$ 3,0 Gew.-% | wenigstens eines Monomeren A |
| $\geq$ 0,5 und $\leq$ 2,0 Gew.-% | wenigstens eines Monomeren B |
| $\geq$ 0,5 und $\leq$ 3,0 Gew.-% | wenigstens eines Monomeren C |
| $\geq$ 0 und $\leq$ 1,0 Gew.-% | wenigstens eines Monomeren D |
| $\geq$ 40 und $\geq$ 65 Gew.-% | wenigstens eines Monomeren E, und |
| $\geq$ 30 und $\leq$ 58,5 Gew.-% | wenigstens eines Monomeren F |

und insbesondere vorteilhaft

| | |
|---|---|
| $\geq$ 1,0 und $\leq$ 2,5 Gew.-% | wenigstens eines Monomeren A |
| $\geq$ 0,5 und $\leq$ 1,5 Gew.-% | wenigstens eines Monomeren B |
| $\geq$ 0,5 und $\leq$ 2,0 Gew.-% | wenigstens eines Monomeren C |
| $\geq$ 0 und $\leq$ 1,0 Gew.-% | wenigstens eines Monomeren D |
| $\geq$ 45 und $\leq$ 60 Gew.-% | wenigstens eines Monomeren E, und |
| $\geq$ 30 und $\leq$ 53 Gew.-% | wenigstens eines Monomeren F |

eingesetzt, wobei

| | |
|---|---|
| $\geq$ 1,0 und $\leq$ 2,5 Gew.-% | Acrylsäure und/oder Methacrylsäure |
| $\geq$ 0,5 und $\leq$ 1,5 Gew.-% | Vinyltriacetoxysilan, 3-Methacryloxypropyltrimethylsilan und/oder Vinyltriethoxysilan |

(fortgesetzt)

| | |
|---|---|
| ≥ 0,5 und ≤ 2,0 Gew.-% | 2-Hydroxyethylacrylat und/oder 2-Hydroxyethylmethacrylat |
| ≥ 45 und ≤ 60 Gew.-% | 2-Ethylhexylacrylat, n-Butylacrylat, und/oder Ethylacrylat, und |
| ≥ 30 und ≤ 53 Gew.-% | Methylmethacrylat, Styrol und/oder tert.-Butylmethacrylat |

besonders bevorzugt eingesetzt werden.

Von Bedeutung ist, dass im Rahmen dieser Schrift die zur Herstellung des Polymerisats P eingesetzten Mengenanteile an Monomeren, dem Anteil dieser Monomeren im auspolymerisierten Polymerisat P entsprechen soll.

Die nach dem erfindungsgemäßen Verfahren erhaltenen Polymerisate P können prinzipiell Glasübergangstemperaturen Tg im Bereich von ≥ -70 und ≤ 150 °C aufweisen. Mit Vorteil werden die Monomeren A, B, C, E und F in Art und Menge so gewählt, dass die lediglich aus ihnen hergestellten Polymerisate eine Glasübergangstemperatur Tg im Bereich von ≥ -50 und 70 °C und vorteilhaft im Bereich ≥ -20 und ≤ 30 °C aufweisen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Wesentlich ist, dass die erfindungsgemäße radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 New.-% einer Polymersaat, jeweils bezogen auf die Gesamtmonomerenmenge, durchgeführt werden kann.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165). Insbesondere wird eine Polymersaat eingesetzt, deren Polymersaatpartikel eine enge Teilchengrößenverteilung und gewichtsmittlere Durchmesser Dw ≤ 100 nm, häufig ≥ 5 nm bis ≤ 50 nm und of ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt

üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und soft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis F zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Zur Herstellung der erfindungsgemäßen wässrigen Polymerisat P-Dispersion kann die Gesamtmenge der Monomeren A bis F (Gesamtmonomerenmenge) im wässrigen Reaktionsmedium vor Initiierung der Polymerisationsreaktiön vorgelegt werden. Es ist aber auch möglich, gegebenenfalls lediglich eine Teilmenge der Monomeren A bis F im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Selbstverständlich ist es auch möglich, die Gesamtmonomerenmenge unter Polymerisationsbedingungen dem wässrigen Medium zuzugeben. Dabei kann jeweils die Dosierung der Monomeren A bis F als separate Einzelströme, als inhomogene oder homogene (Teil)gemische oder als Monomerenemulsion erfolgen. Mit Vorteil werden die Monomeren A bis F in Form eines Monomerengemisches, insbesondere in Form einer wässrigen Monomerenemulsion dosiert.

Zur Herstellung der erfindungsgemäß eingesetzten wässrigen Polymerisate P-Dispersion werden Dispergierhilfsmittel mitverwendet, die sowohl die Monomerentröpfchen, wie auch die gebildeten Polymerisatteilchen im wässrigen Medium dispers verteilt halten und so die Stabilität der erzeugten wässrigen Polymerisat P-Dispersion gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere aniönische Emulgatoren haben sich ferner Verbindungen der allgemeinen Formel (I)

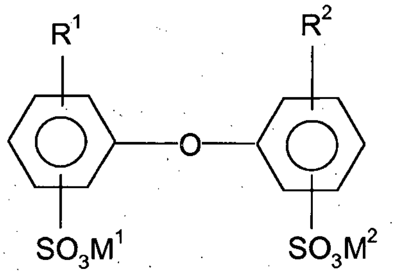

(I),

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können; als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxide, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beilspielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge ≥ 0,005 und ≤ 10 Gew.-%, vorzugsweise ≥ 0,01 und ≤ 5 Gew.-%, insbesondere ≥ 0,1 und ≤ 3 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft ≥ 0,1 und ≤ 40 Gew.-% und häufig ≥ 0,2 und ≤ 25 Gew.-%, jeweils bezogen auf die Gesamtmonomerenmenge.

Bevorzugt werden jedoch anionische und/oder nichtionische Emulgatoren und insbesondere bevorzugt anionische Emulgatoren als Dispergierhilfsmittel eingesetzt.

Zur Herstellung der erfindungsgemäßen Polymerisate P-Dispersion kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-; p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im

wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensuifid, Salze mehrwertiger Metalle, wie E,isen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,1 bis 2 Gew.-%.

Zur Herstellung der erfindungsgemäßen Polymerisate P-Dispersion kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 70 bis 95 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis F mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

Mit besonderem Vorteil erfolgt das erfindungsgemäße Verfahren dergestalt, dass die Monomeren A bis F unter Polymerisationsbedingungen bis zu einem Umsatz von ≥ 95 Gew.-%, vorteilhaft ≥ 99 Gew.-% und insbesondere vorteilhaft ≥ 99,5 Gew.-% umgesetzt werden. Die Ermittlung des Monomerenumsatzes ist dem Fachmann geläufig und erfolgt insbesondere durch reaktionskalorimetrische und/oder spektroskopische Methoden. Häufig ist es vorteilhaft, wenn die nach Abschluss der Polymerisation erhaltene wässrige Polymerisat P-Dispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisat P-Dispersion mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten Monomeren, auch noch andere störende leichtflüchtige organischen Bestandteile (die sogenannten VOCs [volatile organic compounds]) aus der wässrigen Polymerisat P-Dispersion entfernt werden.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton

etc. umfassen. Bevorzugt wird das erfindungsgemäße Verfahren jedoch in Abwesenheit solcher Lösungsmittel durchgeführt.

Neben den vorgenannten Komponenten können während der Emulsionspolymerisation optional auch radikalkettenübertragende Verbindungen eingesetzt werden, um das Molekulargewicht der durch die Polymerisation zugänglichen Polymerisate P zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die während der Emulsionspolymerisation optional eingesetzte Gesamtmenge der radikalkettenübertragenden Verbindungen, bezogen auf die Gesamtmonomerenmenge, ist in der Regel $\leq$ 5 Gew.-%, oft $\leq$ 3 Gew.-% und häufig $\leq$ 1 Gew.-%.

Günstig ist es, wenn eine Teil- oder die Gesamtmenge der optional eingesetzten radikalkettenübertragenden Verbindung dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis F während der Polymerisation zugeführt werden.

Die durch die erfindungsgemäße Emulsionspolymerisation zugänglichen wässrigen Polymerisat P-Dispersionen weisen üblicherweise einen Polymerisatfeststoffgehalt von $\geq$ 10 und $\leq$ 70 Gew.-%, häufig $\geq$ 20 und $\leq$ 65 Gew.-% und oft $\geq$ 25 und $\leq$ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel im Bereich $\geq$ 10 und $\leq$ 1000 nm, häufig im Bereich $\geq$ 10 und $\leq$ 500 nm und oft im Bereich $\geq$ 50 bis $\leq$ 250 nm.

Von Bedeutung ist, dass sich die erfindungsgemäßen wässrigen Polymerisat P-Dispersionen in einfacher Weise (beispielsweise durch die dem Fachmann geläufigen Gefrier- oder Sprühtrocknungsverfahren) in die entsprechenden Polymerisat-P-Pulver überführen lassen.

Von Bedeutung ist ferner, dass die wässrigen Polymerisat P-Dispersionen und/oder die entsprechenden Polymerisat-P-Pulver als Bindemittel bei der Herstellung von Klebstoffen, Dichtmassen, Kunststoffputzen, Papierstreichmassen, Faservliesen und Anstrichmitteln sowie bei der Sandverfestigung, als Komponente bei der Herstellung von Textil- oder Lederhilfsmittel und Schlagzähmodifier oder zur Modifizierung von mineralischen Bindemitteln und Kunststoffen Verwendung finden. Insbesondere bevorzugt ist jedoch die Verwendung der wässrigen Polymerisat P-Dispersionen und/oder der entsprechenden Potymerisat-P-Pulver als Bindemittel bei der Herstellung von Fliesenklebern.

Bei der erfindungsgemäßen Verwendung der erfindungsgemäßen wässrigen Polymerisat P-Dispersionen und/oder der entsprechenden Polymerisat-P-Pulver können zusätzlich noch übliche, dem Fachmann für die jeweilige Verwendung in Art und Menge geläufigen Hilfs- oder Zusatzstoffe, wie beispielsweise Verdicker (wie solche auf Basis von Polyacrylaten, Polyurethanen oder Polysacchariden, wie Borchigel® L75, Tafigel® PUR 40, Viscalex® HV 30, Walocel® MW 40000, Latekol® D, Latekol® DS 6269), Pigmentverteiler (wie Polymere auf Basis von Carbonsäuren, wie beispielsweise Pigmentverteiler® NL, Pigmentverteiler® MD20, Dispex® N40 oder Dispex® G40), Dispergierhilfsmittel (wie oben beschrieben), Biozide (wie Chlormethylisothiazolinon, 2-Methyl- bzw. 1,2-Benzisothiazolinon sowie deren Mischungen, wie beispielsweise Acticid® MV oder Acticid® MBS 2550), Entschäumer (wie Mineralöl- bzw. Silikonölentschäumer und oxyalkylierte Verbindungen, wie beispielsweise Agitan® 282, Agitan® E255, Byk® 93 oder Lumiten® EL), Filmbildehilfsmittel (wie Testbenzin, Texanol®, Butyldiglykol, Dipropylenglykolmonobutylether (Solvenon® DPnB), Tripropylenglykolmonobutylether (Solvenon® TPnB), Butyldiglykolacetat oder Methyldiglykol), Netzmittel (wie 2-Aminopropanol, Acetylendiole, Polyphosphonate), wasserlösliche organische Lösungsmittel (wie Methanol, Ethanol, Isopropanol, Aceton), Pigmente (allgemein feinteilige Feststoffe mit hoher Deckkraft und hohem [> 2] Brechungsindex, wie Zinkoxid, Zinkblende, Rutil, Anatas) oder Füllstoffe (allgemein feinteilige Feststoffe mit niedriger Deckkraft und niedrigem [<1,7] Brechungsindex, wie Calcit, Kreide, Dolomit, Quarz, pyrogene Kieselsäure, Kaolin, Talkum, Glimmer, Baryt,

Wollastonit) etc. eingesetzt werden.

Mit besonderem Vorteil eignen sich die erfindungsgemäßen wässrigen Polymerisat P-Dispersionen und/oder die entsprechenden Polymerisat-P-Pulver als Bindemittel in Fliesenklebern.

Erfindungsgemäße Fliesenkleber enthalten als wesentliche Komponenten

| | |
|---|---|
| ≥ 2 und ≤ 25 Gew.-% | Polymerisat P, |
| ≥ 50 und ≤ 95 Gew.-% | anorganischer Füllstoff, |
| ≥ 0,01 und ≤ 2 Gew.-% | Entschäumer, |
| ≥ 0 und ≤ 4 Gew.-% | Verdicker und |
| ≥ 0,1 und ≤ 2 Gew.-% | Dispergierhilfsmittel und/oder Pigmentverteiler, |

jeweils bezogen auf den Feststoffgehalt des Fliesenklebers.

Die mit den erfindungsgemäßen wässrigen Polymerisat P-Dispersionen hergestellten Fliesenkleber weisen im Vergleich zum Stand der Technik verbesserte anwendungstechnische Eigenschaften, wie insbesondere eine verlängerte Verarbeitungszeit, eine höhere Haftung von keramischen Fliesen an Oberflächen sowie eine verbesserte Scherfestigkeit nach Wasserlagerung auf.

Die nachfolgenden, nicht einschränkenden Beispiele sollen die Erfindung erläutern.

Beispiele

A) Herstellung der Polymerisate P in Form ihrer wässrigen Dispersionen

Polymerisatvergleichsdispersion V1

In einem 4 l-Glaskolben, ausgerüstet mit einem Rührer und 4 Dosiereinrichtungen wurden bei 20 bis 25 °C (Raumtemperatur) und unter Stickstoffatmosphäre 530 g entionisiertes Wasser sowie 21,2 g einer 33 gew.-%igen wässrigen Polystyrolsaatdispersion (mittlerer Teilchendurchmesser 32 nm) vorgelegt und unter Rühren auf 85 °C aufgeheizt. Nach Erreichen dieser Temperatur wurden 10,0 g von Zulauf 2 innerhalb von 5 Minuten zudosiert. Daran anschließend wurden gleichzeitig beginnend die Gesamtmenge von Zulauf 1 und die Restmenge von Zulauf 2 unter Rühren und Aufrechterhaltung der vorgenannten Temperatur zudosiert. Dabei wurde die Restmenge von Zulauf 2 kontinuierlich und mit gleichbleibendem Mengenstrom über 3 Stunden und 15 Minuten zudosiert, während Zulauf 1 beginnend mit einer Dosiergeschwindigkeit von 2,74 g/min innerhalb von 15 Minuten auf 11 g/min gesteigert und daran anschließend mit gleichbleibender Dosiergeschwindigkeit von 11 g/min weiter dosiert wurde.

Zulauf 1: wässrige Emulsion aus

| | |
|---|---|
| 28,0 g | Acrylsäure |
| 14,0 g | Vinyltriethoxysilan |
| 644 g | Styrol |
| 714 g | Ethylhexylacrylat |
| 140 g | einer 15 gew.-%igen wässrigen Lösung von Natriumlaurylsulfat (Disponil® SDS der Firma Cognis GmbH) |
| 5,6 g | einer 25 gew.-%igen wässrigen Lösung von Natronlauge |
| 365 g | entionisiertes Wasser |

Zulauf 2: wässrige Lösung aus

| | |
|---|---|
| 93,3 | entionisiertem Wasser |
| 7,0 g | Natriumpersulfat |

Anschließend ließ man das Polymerisationsgemisch noch 2 Stunden bei 80 °C nachpolymerisieren und kühlte es auf Raumtemperatur ab. Durch Zugabe von 25 gew.-%iger wässriger Natronlaugelösung wurde ein pH-Wert von 7,8

eingestellt. Die erhaltene wässrige Polymerisatdispersion wies einen Feststoffgehalt von 51,9 Gew.-% bezogen auf das Gesamtgewicht der wässrigen Dispersion auf. Der zahlenmittlere Teilchendurchmesser zu 176 nm bestimmt.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13321).

Polymerisatvergleichsdispersion V2

Die Herstellung der Polymerisatvergleichsdispersion V2 erfolgte analog zur Herstellung der Polymerisatvergleichsdispersion V1 mit dem Unterschied, dass in Zulauf 1 14,0 g 2-Hydroxyethylacrylat anstelle von 14,0 g Vinyltriethoxysilan eingesetzt wurden.

Die erhaltene wässrige Polymerisatdispersion wies einen Feststoffgehalt von 52,0 Gew.-% bezogen auf das Gesamtgewicht der wässrigen Dispersion auf. Der zahlenmittlere Teilchendurchmesser zu 181 nm bestimmt.

Polymerisatdispersion D

Die Herstellung der Polymerisatdispersion D erfolgte analog zur Herstellung der Polymerisatvergleichsdispersion V1 mit dem Unterschied, dass in Zulauf 1 zusätzlich 14,0 g 2-Hydroxyethylacrylat sowie 707 g anstelle von 714 g Ethylhexylacrylat und 637 g anstelle von 644 g Styrol eingesetzt wurden.

Die erhaltene wässrige Polymerisatdispersion wies einen Feststoffgehalt von 51,8 Gew.-% bezogen auf das Gesamtgewicht der wässrigen Dispersion auf. Der zahlenmittlere Teilchendurchmesser zu 187 nm bestimmt.

B) Anwendungstechnische Untersuchungen

B1) Herstellung der Fliesenklebstoffe

Die wässrige Polymerisatdispersionen V1, V2 und D wurden mit entionisiertem Wasser auf einen Feststoffgehalt von 50 Gew.-% verdünnt. Anschließend wurden die in Art und Menge angegebenen Klebstoffkomponenten in folgender Reihenfolge unter Rühren mit einem Korbrührer zusammengegeben: 17 Gew.-Teile entionisiertes Wasser, 6 Gew.-Teile Verdicker (Viscalex® HV30 der Fa. BASF SE), 1 Gew.-Teil Entschäumer (Lumiten® EL der Fa. BASF SE), 300 Gew.-Teile der auf 50 Gew.-% verdünnten wässrigen Polymerisatdispersionen V1, V2 oder D, 3 Gew.-Teile Pigmentverteiler (Pigmentverteiler® MD20 der Fa. BASF SE), 3 Gew.-Teile Verdicker (Viscalex® HV30), 453 Gew.-Teile Füllstoff Calciumcarbonat (Omyacarb® 40 GU der Fa. Omya) und 217 Gew.-Teile Füllstoff Calciumcarbonat (Omyacarb® 130 GU der Fa. Omya). Anschließend wurden die erhaltenen Formulierungen für 15 Minuten weitergerührt. Die so hergestellten Fliesenklebstoffe FKV1, FKV2 und FKD wurden vor der Prüfung mindestens 24 Stunden bei Raumtemperatur in einem verschlossen Behälter gelagert.

B2) Anwendungstechnische Prüfungen

a) Prüfung der Scherfestigkeit nach Wasserlagerung

Die Prüfung erfolgte in Anlehnung an DIN EN 1324. Mithilfe einer Schablone (siehe DIN EN 1324, Abschnitt 6.1) wurde auf die unglasierte Rückseite einer Prüffliese des Typs P2, mit den Maßen der Ansichtsfläche von 108 mm x 108 mm, Fliesenklebstoff FKV1, FKV2 oder FKD aufgetragen und sauber abgezogen, so dass alle Löcher der Schablone vollständig gefüllt waren. Dann wurde die Schablone abgehoben und in jede Ecke der Fliese je ein 0,8 mm dicker Abstandhalter gelegt. Nach 2 Minuten wurde eine zweite Prüffliese mit der unglasierten Rückseite so auf die beschichte Fliese gelegt, dass eine Überlappung der Fliesen mit einer Verschiebung um 6 mm erreicht wurde. Danach wurden die überlappende Fläche des so erhaltenen Prüfkörpers für 3 Minuten mit einem Gewicht von 7 kg belastet und anschließend die Abstandhalter entfernt. Pro Fliesenklebstoff wurden jeweils 5 Prüfkörper hergestellt und diese zuerst 7 Tage bei 23 °C und 50 % relative Luftfeuchtigkeit (Normklima) und danach für 7 Tage bei Raumtemperatur waagrecht unter Wasser gelagert. Anschließend wurden die Prüfkörper aus dem Wasser genommen, mit einem Baumwolltuch trocken getupft und mit einer Vorrichtung für den Scherversuch in einer Druckprüfmaschine der Fa. Zwick geprüft. Die Messungen wurden jeweils mit einer Schergeschwindigkeit von 5 mm pro Minute bis zum Bruch durchgeführt. Dabei ist die Scherfestigkeit umso besser zu werten, je höher die Scherkraft in N/mm$^2$ beim Bruch ist. Die in Tabelle 1 für die einzelnen Fliesenkleber angegebenen Scherfestigkeiten beim Bruch stellen den Mittelwert der 5 Messungen dar.

b) Prüfung der offenen Zeit

Die Prüfung erfolgte in Anlehnung an DIN EN 1346. Es wurde zunächst eine dünne Schicht des entsprechenden Fliesenklebstoffs FKV1, FKV2 oder FKD auf eine 3,7 cm dicke Betonplatte (entsprechend EN 1323) aufgetragen. Anschließend wurde eine dickere Schicht mit einem Kammspachtel mit einer Zahnung 6 mm x 6 mm und einem Mittenabstand von 12 mm aufgekämmt. Nach 5 Minuten, 10 Minuten, 20 Minuten und 30 Minuten Ablüftzeit wurden dann jeweils 5 Prüffliesen des Typs P1 mit den Maßen der Ansichtsfläche von 50 mm x 50 mm in 35 mm Abstand voneinander in den Klebstoff eingelegt und jede Fliese für 30 Sekunden mit einem Gewicht von 2 kg belastet. Daran anschließend wurde die mit Fliesen beklebte Betonplatte für 13 Tage bei Normklima gelagert. Daran anschließend wurden Zuganker-Platten mit einem Epoxidharz-Klebstoff (Ardex® WA der Fa. Ardex) auf die Fliesen geklebt. Nach einer weiteren Lagerung für 24 Stunden im Normklima wurde die Haftzugfestigkeit der Fliesenkleber durch Anlegen einer Kraft bestimmt, die mit einer konstanten Geschwindigkeit von 250 N pro Sekunde bis zum Abreißen der Fliese zunahm. Dabei ist die Haftzugfestigkeit umso besser zu bewerten, je höher die Kraft in N/mm$^2$ beim Abreißen der Fliese war. Die in Tabelle 1 angegebenen Werte stellen jeweils die Mittelwerte der mit den 5 Prüffliesen erhaltenen Haftzugfestigkeiten dar.

c) Prüfung der Haftzugfestigkeit nach 16 Stunden

Die Prüfung erfolgte in Anlehnung an DIN EN 1348. Zur Vorbereitung der Prüfung wurden Zuganker mit einem Epoxidharz-Klebstoff (Ardex® WA der Fa. Ardex) auf die Prüffliesen des Typs V1 mit den Maßen der Ansichtsfläche von 50 mm x 50 mm geklebt und vor der Verwendung mindestens 24 Stunden trocknen lassen. Zur Herstellung der Prüfkörper wurde zunächst eine dünne Schicht des Klebstoffs auf eine 8 mm dicke Eterplan®-Platte der Fa. Eternit aufgetragen. Anschließend wurde eine dickere Schicht des Klebstoffs mit einem Kammspachtel mit einer Zahnung 6 mm x 6 mm und einem Mittenabstand von 12 mm aufgekämmt. Nach 5 Minuten Ablüftzeit wurden jeweils 5 der zuvor vorbereiteten Prüffliesen in 10 mm Abstand voneinander in den jeweiligen Fliesenklebstoff eingelegt und jede Fliese für 30 Sekunden mit einem Gewicht von 2 kg belastet. Daran anschließend wurde die mit den Fliesen beklebte Eterplan®-Platte für 16 Stunden im Normklima gelagert. Danach wurde die Haftzugfestigkeit der Fliesenkleber durch Anlegen einer Kraft bestimmt, die mit einer konstanten Geschwindigkeit von 250 N pro Sekunde bis zum Abreißen der Fliese zunahm. Dabei ist die Haftzugfestigkeit umso besser zu bewerten, je höher die Kraft in N/mm$^2$ beim Abreißen der Fliese war. Die in Tabelle 1 angegebenen Werte stellen jeweils die Mittelwerte der mit den 5 Prüffliesen erhaltenen Haftzugfestigkeiten dar.

Tabelle 1: Ergebnisse der Scherfestigkeit nach Wasserlagerung, der offenen Zeit und der Haftzugfestigkeit nach 16 Stunden

| Fliesenklebstoff | | FKV1 | FKV2 | FKD |
|---|---|---|---|---|
| Scherfestigkeit nach Wasserlagerung [N/mm$^2$] | | 0,76 | 0,29 | 1,06 |
| Haftzugfestigkeit nach 16 Stunden [N/mm$^2$] | | 0,09 | 0,08 | 0,13 |
| Haftzugfestigkeit [N/mm$^2$] | | | | |
| bei einer offenen Zeit von | 5 Minuten | 0,98 | 1,28 | 1,36 |
| | 10 Minuten | 0,47 | 0,97 | 1,14 |
| | 20 Minuten | 0,37 | 0,47 | 0,78 |
| | 30 Minuten | 0,32 | 0,15 | 0,67 |

Aus den Ergebnissen ist klar ersichtlich, dass der mit dem erfindungsgemäßen Polymerisat P hergestellte Fliesenklebstoff FKD eine verbesserte Scherfestigkeit nach Wasserlagerung, eine verbesserte Haftzugfestigkeit nach 16 Stunden sowie eine deutlich verlängerte Verarbeitungszeit im Vergleich zu den nicht erfindungsgemäßen Fliesenklebstoffen FKV1 und FKV2 aufweist.

## Patentansprüche

1. Verfahren zur Herstellung einer wässrigen Dispersion eines Polymerisats P durch radikalisch initiierte wässrige Emulsionspolymerisation ethylenisch ungesättigter Verbindungen, **dadurch gekennzeichnet, dass**

| | |
|---|---|
| ≥ 0,1 und ≤ 5,0 Gew.-% | wenigstens einer α,β-monoethylenisch ungesättigten $C_3$- bis $C_6$-Mono- oder Dicarbonsäure und/oder wenigstens eines α,β-monoethylenisch ungesättigten $C_3$- bis $C_6$-Mono- oder Dicarbonsäureamids (Monomere A) |
| ≥ 0,1 und ≤ 5,0 Gew.-% | wenigstens einer monoethylenisch ungesättigten silangruppenhaltigen Verbindung (Monomere B) |
| ≥ 0,1 und ≤ 5,0 Gew.-% | wenigstens eines Hydroxyalkylacrylats und/oder - methacrylats (Monomere C) |
| ≥ 0 und ≤ 5,0 Gew.-% | wenigstens eines vernetzend wirkenden Monomeren mit wenigstens zwei nichtkonjugierten ethylenisch ungesättigten Gruppen (Monomere D) |
| ≥ 30 und ≤ 75 Gew.-% | wenigstens eines ethylenisch ungesättigten Monomeren, dessen Homopolymerisat eine Glasübergangstemperatur ≤ 30 °C aufweist (Monomere E) und welches sich von den Monomeren A bis D unterscheidet, und |
| ≥ 20 und ≤ 69,7 Gew.-% | wenigstens eines ethylenisch ungesättigten Monomeren, dessen Homopolymerisat eine Glasübergangstemperatur ≥ 50 °C aufweist (Monomere F) und welches sich von den Monomeren A bis D unterscheidet, |

wobei sich die Mengen der Monomeren A bis F auf 100 Gew.-% aufsummieren, eingesetzt werden.

2. Verfahren nach Anspruch 1, **dadurch gekennzeichnet, dass** das wenigstens eine Monomere E ausgewählt ist aus der Gruppe umfassend konjugierte aliphatische $C_4$- bis $C_9$-Dienverbindung, Ester aus Vinylalkohol und einer $C_1$- bis $C_{10}$-Monocarbonsäure, $C_1$- bis $C_{10}$-Alkylacrylat, $C_5$- bis $C_{10}$-Alkylmethacrylat, $C_5$- bis $C_{10}$-Cycloalkylacrylat und - methacrylat, $C_1$- bis $C_{10}$-Dialkylmaleinat und $C_1$- bis $C_{10}$-Dialkylfumarat und das wenigstens eine Monomere F ausgewählt ist aus der Gruppe umfassend vinylaromatisches Monomer und $C_1$- bis $C_4$-Alkylmethacrylat.

3. Verfahren nach einem der Ansprüche 1 oder 2, **dadurch gekennzeichnet, dass** das Monomere B ausgewählt ist aus der Gruppe umfassend Vinyltriacetoxysilan, 3-Methacryloxypropyltrimethylsilan und Vinyltriethoxysilan und das Monomere C ausgewählt ist aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat.

4. Verfahren nach einem der Ansprüche 1 bis 3, **dadurch gekennzeichnet, dass**

| | |
|---|---|
| ≥ 0,5 und ≤ 3,0 Gew.-% | wenigstens eines Monomeren A |
| ≥ 0,5 und ≤ 2,0 Gew.-% | wenigstens eines Monomeren B |
| ≥ 0,5 und ≤ 3,0 Gew.-% | wenigstens eines Monomeren C |
| ≥ 0 und ≤ 1,0 Gew.-% | wenigstens eines Monomeren D |
| ≥ 40 und ≤ 65 Gew.-% | wenigstens eines Monomeren E, und |
| ≥ 30 und ≤ 58,5 Gew.-% | wenigstens eines Monomeren F |

eingesetzt werden.

5. Verfahren nach einem der Ansprüche 1 bis 4, **dadurch gekennzeichnet, dass**

| | |
|---|---|
| ≥ 1,0 und ≤ 2,5 Gew.-% | wenigstens eines Monomeren A |
| ≥ 0,5 und ≤ 1,5 Gew.-% | wenigstens eines Monomeren B |
| ≥ 0,5 und ≤ 2,0 Gew.-% | wenigstens eines Monomeren C |
| ≥ 0 und ≤ 1,0 Gew.-% | wenigstens eines Monomeren D |
| ≥ 45 und ≤ 60 Gew.-% | wenigstens eines Monomeren E, und |
| ≥ 30 und ≤ 53 Gew.-% | wenigstens eines Monomeren F |

eingesetzt werden.

6. Verfahren nach einem der Ansprüche 1 bis 5, **dadurch gekennzeichnet, dass** die Art und die Menge der Monomeren A, B, C, E und F so gewählt werden, dass ein aus ihnen hergestelltes Polymerisat eine Glasübergangstemperatur

≥ -20 und ≤ 30 °C aufweisen würde.

**7.** Wässrige Polymerisatdispersion erhältlich nach einem Verfahren gemäß einem der Ansprüche 1 bis 6.

**8.** Polymerisatpulver erhältlich durch Trocknung einer wässrigen Polymerisatdispersion gemäß Anspruch 7.

**9.** Verwendung einer wässrigen Polymerisatdispersion gemäß Anspruch 7 oder eines Polymerisatpulvers gemäß Anspruch 8 als Bindemittel bei der Herstellung von Klebstoffen, Dichtmassen, Kunststoffputzen, Papierstreichmassen, Faservliesen und Anstrichmitteln sowie bei der Sandverfestigung, als Komponente bei der Herstellung von Textil- oder Lederhilfsmittel und Schlagzähmodifier oder zur Modifizierung von mineralischen Bindemitteln und Kunststoffen.

**10.** Verwendung einer wässrigen Polymerisatdispersion gemäß Anspruch 7 oder eines Polymerisatpulvers gemäß Anspruch 8 als Bindemittel bei der Herstellung von Fliesenklebern.

**11.** Fliesenkleber, enthaltend als wesentliche Komponenten

| | |
|---|---|
| ≥ 2 und ≤ 25 Gew.-% | Polymerisat P, |
| ≥ 50 und ≤ 95 Gew.-% | anorganischer Füllstoff, |
| ≥ 0,01 und ≤ 2 Gew.-% | Entschäumer, |
| ≥ 0 und ≤ 4 Gew.-% | Verdicker und |
| ≥ 0,1 und ≤ 2 Gew.-% | Dispergierhilfsmittel und/oder Pigmentverteiler, |

jeweils bezogen auf den Feststoffgehalt des Fliesenklebers.

**Claims**

**1.** A process for preparing an aqueous dispersion of a polymer P by radically initiated aqueous emulsion polymerization of ethylenically unsaturated compounds, which comprises using

| | |
|---|---|
| ≥ 0.1 % and ≤ 5.0% by weight | of at least one α,β-monoethylenically unsaturated $C_3$ to $C_6$ monocarboxylic or dicarboxylic acid and/or at least one α,β-monoethylenically unsaturated $C_3$ to $C_6$ monocarboxamide or dicarboxamide (monomers A), |
| ≥ 0.1 % and ≤ 5.0% by weight | of at least one monoethylenically unsaturated compound containing silane groups (monomers B), |
| ≥ 0.1 % and ≤ 5.0% by weight | of at least one hydroxyalkyl acrylate and/or hydroxyalkyl methacrylate (monomers C), |
| ≥ 0% and ≤ 5.0% by weight | of at least one crosslinking monomer having at least two nonconjugated ethylenically unsaturated groups (monomers D), |
| ≥ 30% and ≤ 75% by weight | of at least one ethylenically unsaturated monomer whose homopolymer has a glass transition temperature of ≤ 30°C (monomers E) and which differs from the monomers A to D, and |
| ≥ 20% and ≤ 69.7% by weight | of at least one ethylenically unsaturated monomer whose homopolymer has a glass transition temperature of ≥ 50°C (monomers F) and which differs from the monomers A to D, and |

the amounts of the monomers A to F adding up to 100% by weight.

**2.** The process according to claim 1, wherein the at least one monomer E is selected from the group encompassing conjugated aliphatic $C_4$ to $C_9$ diene compound, esters of vinyl alcohol and a $C_1$ to $C_{10}$ monocarboxylic acid, $C_1$ to $C_{10}$ alkyl acrylate, $C_5$ to $C_{10}$ alkyl methacrylate, $C_5$ to $C_{10}$ cycloalkyl acrylate and methacrylate, $C_1$ to $C_{10}$ dialkyl maleate, and $C_1$ to $C_{10}$ dialkyl fumarate, and the at least one monomer F is selected from the group encompassing vinylaromatic monomer and $C_1$ to $C_4$ alkyl methacrylate.

**3.** The process according to either of claims 1 and 2, wherein the monomer B is selected from the group encompassing vinyltriacetoxysilane, 3-methacryloyloxypropyltrimethylsilane, and vinyltriethoxysilane, and the monomer C is selected from the group encompassing diethylene glycol monoacrylate, 4-hydroxybutyl acrylate, 3-hydroxypropyl acrylate, 2-hydroxypropyl acrylate, 2-hydroxyethyl acrylate, diethylene glycol monomethacrylate, 4-hydroxybutyl methacrylate, 3-hydroxypropyl methacrylate, 2-hydroxypropyl methacrylate, and 2-hydroxyethyl methacrylate.

**4.** The process according to any of claims 1 to 3, wherein

| | |
|---|---|
| ≥ 0.5% and ≤ 3.0% by weight | of at least one monomer A, |
| ≥ 0.5% and ≤ 2.0% by weight | of at least one monomer B, |
| ≥ 0.5% and ≤ 3.0% by weight | of at least one monomer C, |
| ≥ 0% and ≤ 1.0% by weight | of at least one monomer D, |
| ≥ 40% and ≤ 65% by weight | of at least one monomer E, and |
| ≥ 30% and ≤ 58.5% by weight | of at least one monomer F |

are used.

**5.** The process according to any of claims 1 to 4, wherein

| | |
|---|---|
| ≥ 1.0% and ≤ 2.5% by weight | of at least one monomer A, |
| ≥ 0.5% and ≤ 1.5% by weight | of at least one monomer B, |
| ≥ 0.5% and ≤ 2.0% by weight | of at least one monomer C, |
| ≥ 0% and ≤ 1.0% by weight | of at least one monomer D, |
| ≥ 45% and ≤ 60% by weight | of at least one monomer E, and |
| ≥ 30% and ≤ 53% by weight | of at least one monomer F |

are used.

**6.** The process according to any of claims 1 to 5, wherein the nature and the amount of the monomers A, B, C, E, and F are selected such that a polymer prepared from them would have a glass transition temperature of ≥ -20 and ≤ 30°C.

**7.** An aqueous polymer dispersion obtainable by a process according to any of claims 1 to 6.

**8.** A polymer powder obtainable by drying an aqueous polymer dispersion according to claim 7.

**9.** The use of an aqueous polymer dispersion according to claim 7 or of a polymer powder according to claim 8 as a binder in the production of adhesives, sealants, polymeric renders, papercoating slips, fiber nonwovens, and paints, and also in sand consolidation, as a component in the production of textile assistants or leather assistants, and impact modifiers, or for modifying mineral binders and plastics.

**10.** The use of an aqueous polymer dispersion according to claim 7 or of a polymer powder according to claim 8 as a binder in the production of tile adhesives.

**11.** A tile adhesive comprising as essential components

| | |
|---|---|
| ≥ 2% and ≤ 25% by weight | of polymer P, |
| ≥ 50% and ≤ 95% by weight | of inorganic filler, |
| ≥ 0.01 % and ≤ 2% by weight | of defoamer, |
| ≥ 0% and ≤ 4% by weight | of thickener, and |
| ≥ 0.1% and ≤ 2% by weight | of dispersing assistant and/or pigment dispersant, |

based in each case on the solids content of the tile adhesive.

## Revendications

**1.** Procédé de fabrication d'une dispersion aqueuse d'un polymère P par polymérisation en émulsion aqueuse initiée radicalairement de composés éthyléniquement insaturés, **caractérisé en ce que**

≥ 0, 1 et ≤ 5, % en poids d'au moins un acide mono- ou dicarboxylique en $C_3$ à $C_6$ $\alpha,\beta$-monoéthyléniquement insaturé et/ou d'au moins un amide d'acide mono- ou dicarboxylique en $C_3$ à $C_6$ $\alpha,\beta$-monoéthyléniquement insaturé (monomère A),
≥ 0,1 et ≤ 5,0 % en poids d'au moins un composé monoéthyléniquement insaturé contenant des groupes silane (monomère B),
≥ 0,1 et ≤ 5,0 % en poids d'au moins un acrylate et/ou méthacrylate d'hydroxyalkyle (monomère C),
≥ 0 et ≤ 5,0 % en poids d'au moins un monomère à effet réticulant contenant au moins deux groupes éthyléniquement insaturés non conjugués (monomère D), ≥ 30 et ≤ 75 % en poids d'au moins un monomère éthyléniquement insaturé dont l'homopolymère présente une température de transition vitreuse ≤ 30 °C (monomère E) et qui diffère des monomères A à D, et
≥ 20 et ≤ 69,7 % en poids d'au moins un monomère éthyléniquement insaturé dont l'homopolymère présente une température de transition vitreuse ≥ 50 °C (monomère F) et qui diffère des monomères A à D,
sont utilisés,
la somme des quantités des monomères A à F étant de 100 % en poids.

2. Procédé selon la revendication 1, **caractérisé en ce que** ledit au moins un monomère E est choisi dans le groupe comprenant un composé diénique en $C_4$ à $C_9$ aliphatique conjugué, un ester de l'alcool vinylique et d'un acide monocarboxylique en $C_1$ à $C_{10}$, un acrylate d'alkyle en $C_1$ à $C_{10}$, un méthacrylate d'alkyle en $C_5$ à $C_{10}$, un acrylate et méthacrylate de cycloalkyle en $C_5$ à $C_{10}$, un maléinate de dialkyle en $C_1$ à $C_{10}$ et un fumarate de dialkyle en $C_1$ à $C_{10}$, et ledit au moins un monomère F est choisi dans le groupe comprenant un monomère vinylaromatique et un méthacrylate d'alkyle en $C_1$ à $C_4$.

3. Procédé selon l'une quelconque des revendications 1 ou 2, **caractérisé en ce que** le monomère B est choisi dans le groupe comprenant le vinyltriacétoxysilane, le 3-méthacryloxypropyltriméthylsilane et le vinyltriéthoxysilane, et le monomère C est choisi dans le groupe comprenant le monoacrylate de diéthylène glycol, l'acrylate de 4-hydroxybutyle, l'acrylate de 3-hydroxypropyle, l'acrylate de 2-hydroxypropyle, l'acrylate de 2-hydroxyéthyle, le monométhacrylate de diéthylène glycol, le méthacrylate de 4-hydroxybutyle, le méthacrylate de 3-hydroxypropyle, le méthacrylate de 2-hydroxypropyle et le méthacrylate de 2-hydroxyéthyle.

4. Procédé selon l'une quelconque des revendications 1 à 3, **caractérisé en ce que**
≥ 0,5 et ≤ 3,0 % en poids d'au moins un monomère A
≥ 0,5 et ≤ 2,0 % en poids d'au moins un monomère B
≥ 0,5 et ≤ 3,0 % en poids d'au moins un monomère C
≥ 0 et ≤ 1,0 % en poids d'au moins un monomère D
≥ 40 et ≤ 65 % en poids d'au moins un monomère E, et
≥ 30 et ≤ 58,5 % en poids d'au moins un monomère F sont utilisés.

5. Procédé selon l'une quelconque des revendications 1 à 4, **caractérisé en ce que**
≥ 1,0 et ≤ 2,5 % en poids d'au moins un monomère A
≥ 0,5 et ≤ 1,5 % en poids d'au moins un monomère B
≥ 0,5 et ≤ 2,0 % en poids d'au moins un monomère C
≥ 0 et ≤ 1,0 % en poids d'au moins un monomère D
≥ 45 et ≤ 60 % en poids d'au moins un monomère E, et
≥ 30 et ≤ 53 % en poids d'au moins un monomère F sont utilisés.

6. Procédé selon l'une quelconque des revendications 1 à 5, **caractérisé en ce que** le type et la quantité des monomères A, B, C, E et F sont choisis de sorte qu'un polymère fabriqué à partir de ceux-ci présente une température de transition vitreuse ≥ -20 et ≤ 30 °C.

7. Dispersion aqueuse de polymère pouvant être obtenue par un procédé selon l'une quelconque des revendications 1 à 6.

8. Poudre de polymère pouvant être obtenue par séchage d'une dispersion aqueuse de polymère selon la revendication 7.

9. Utilisation d'une dispersion aqueuse de polymère selon la revendication 7 ou d'une poudre de polymère selon la revendication 8 en tant que liant lors de la fabrication d'adhésifs, de matériaux d'étanchéité, d'enduits plastiques, de sauces de couchage pour papier, de non-tissés de fibres et de peintures, ainsi que lors de la consolidation de

sable, en tant que composant lors de la fabrication d'adjuvants pour textiles ou cuir, et en tant que modificateur de la résistance aux impacts ou pour la modification de liants minéraux et de plastiques.

**10.** Utilisation d'une dispersion aqueuse de polymère selon la revendication 7 ou d'une poudre de polymère selon la revendication 8 en tant que liant lors de la fabrication de colles pour carreaux.

**11.** Colle pour carreaux, contenant en tant que composants principaux :

≥ 2 et ≤ 25 % en poids d'un polymère P,
≥ 50 et ≤ 95 % en poids d'une charge inorganique,
≥ 0,01 et ≤ 2 % en poids d'un antimousse,
≥ 0 et ≤ 4 % en poids d'un épaississant et
≥ 0,1 et ≤ 2 % en poids d'un adjuvant de dispersion et/ou d'un distributeur de pigment,
à chaque fois par rapport à la teneur en solides de la colle pour carreaux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 35332 A
- EP 366969 A
- EP 640630 A
- EP 1147139 A
- EP 1180530 A
- EP 1732997 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- WO 2008150647 A
- US 2520959 A
- US 3397165 A
- US 4269749 A


### In der Beschreibung aufgeführte Nicht-Patentliteratur


- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **G. KANIG.** *Kolloid-Zeitschrift & Zeitschrift für Polymere,* vol. 190, 1
- Ullmann’ s Encyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **T.G. FOX.** *Bull. Am. Phys. Soc.,* 1956, vol. 1, 123
- Ullmann’s Encyclopädie der technischen Chemie. Verlag Chemie, 1980, vol. 19, 18
- POLYMER HANDBOOK. J. Wiley, 1975
- Ullmann’s Encyclopedia of Industrial Chemistry. Verlag Chemie, 1992, 169
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- **MCCUTCHEON’S.** Emulsifiers & Detergents. MC Publishing Company, 1989
- **J. BRANDRUP ; E.H. IMMERGUT.** Polymerhandbook. John Wiley & Sons, 1989, 133-141